# FASCICULE DE BREVET EUROPEEN

(11) **EP 2 615 726 B1**
(45) Date de publication et mention de la délivrance du brevet: **06.03.2019**
(21) Numéro de dépôt: 13151355.8
(22) Date de dépôt: 15.01.2013
(51) Int. Cl.: H02K 15/00, H02K 17/16

(54) **Rotor, procédé de fabrication et machine électrique correspondants**
Rotor, entsprechendes Herstellungsverfahren und entsprechende elektrische Maschine
Rotor, corresponding manufacturing method and electrical machine

(30) Priorité: 16.01.2012 FR 1250391
(43) Date de publication de la demande: 17.07.2013
(73) Titulaire: GE Energy Power Conversion Technology Ltd, Rugby Warwickshire CV21 1BU (GB)
(72) Inventeur: Galmiche, Christophe, 54200 Toul (FR); Durantay, Lionel, 54390 Frouard (FR)
(74) Mandataire: Serjeants LLP

(56) Documents cités:
- EP-A1- 1 039 618
- WO-A1-2005/124973
- DE-A1- 2 214 668
- JP-A- 56 110 465

## Description

La présente invention concerne un rotor s'étendant selon un axe de rotation, et comprenant :
- une cage de court-circuit ayant au moins une barre et au moins une première couronne de court-circuit électrique et mécanique ;
- la ou chaque barre ayant une première partie d'extrémité ;
- la première partie d'extrémité étant liée à la première couronne de court-circuit mécaniquement et électriquement par un moyen de liaison ;
- le ou chaque moyen de liaison étant un moyen de liaison par complémentarité de formes retenant la partie d'extrémité par rapport à la couronne de court-circuit associée dans un sens de retenue qui s'étend radialement par rapport à l'axe de rotation.

On connaît un rotor pour moteur asynchrone du document EP0608675.

Le rotor comprend une masse magnétique et une cage de court-circuit. La cage de court-circuit comprend deux couronnes de court-circuit et une pluralité de barres rondes.

Les extrémités des barres rondes sont disposées librement dans des orifices circulaires ménagées dans les couronnes de court-circuit.

Ce rotor présente les inconvénients suivants.

Premièrement, la libre disposition des extrémités dans les orifices ne permet pas de garantir des contacts électrique et mécanique dans toutes les conditions d'utilisation.

Deuxièmement, la forme ronde des barres et la forme circulaire des orifices donne lieu à une puissance relativement faible du moteur pour un volume donné. En particulier, la forme ronde des barres ne permet qu'un faible taux de remplissage en matière de cuivre.

L'invention a pour but de pallier à au moins un de ces inconvénients.

Le préambule de la revendication 1 est dérivable de JP 56-110465.

A cet effet, l'invention a pour objet un rotor tel qu'indiqué ci-dessus, dans lequel, lorsque le rotor ne tourne pas autour de son axe de rotation, le moyen de liaison précontraint la partie d'extrémité dans un sens de précontrainte ayant une composante radiale par rapport à l'axe de rotation, notamment qui est dirigé radialement par rapport à l'axe de rotation, en particulier lorsque le sens de précontrainte est opposé au sens de retenue, le sens de retenue étant un sens s'opposant à un déplacement radialement vers l'extérieur de la partie d'extrémité, caractérisé en ce que le ou chaque moyen de liaison définit un jeu radial entre la partie d'extrémité associée et la couronne de retenue associée dans un sens allant à l'encontre du sens de retenue.

Le rotor selon l'invention peut comporter l'une ou plusieurs des caractéristiques suivantes :
- la cage de court-circuit comporte une seconde couronne de court-circuit électrique et mécanique, la ou chaque barre ayant une seconde partie d'extrémité ;
- la seconde partie d'extrémité est liée à la seconde couronne de court-circuit mécaniquement et électriquement également par un moyen de liaison ;
- le ou chaque moyen de liaison comprend un méplat de contact de la partie d'extrémité et une surface plane associée à la couronne de court-circuit associée, le méplat de contact s'appliquant sur la surface plane ;
- le ou chaque moyen de liaison comprend un organe de contact interposé entre la couronne de court-circuit associée et la partie d'extrémité associée, le cas échéant l'organe de contact formant la surface plane ;
- l'organe de contact est un ressort à lame ou une lamelle flexible ;
- le ou chaque moyen de liaison comprend une butée adaptée pour limiter un déplacement de la partie d'extrémité dans le sens de retenue sous la force de centrifuge lors d'une rotation du rotor autour de son axe de rotation ;
- le ou chaque moyen de liaison comprend une surface de retenue de la couronne de court-circuit et une surface de retenue de la partie d'extrémité associée, ces deux surfaces étant en contact avec précontrainte l'une de l'autre lorsque le rotor ne tourne pas autour de son axe de rotation.

L'invention a également pour objet un procédé de fabrication d'un rotor tel qu'indiqué ci-dessus, caractérisé par les étapes successives :
- dilater la couronne de court-circuit en la chauffant ;
- enfiler la couronne de court-circuit dilatée sur la ou chaque partie d'extrémité associée à cette couronne de court-circuit ;
- laisser rétrécir la couronne de court-circuit en la laissant refroidir ;
- la précontrainte de la partie d'extrémité étant créée lors du rétrécissement de la couronne de court-circuit.

Enfin, l'invention a pour objet une machine électrique en particulier machine asynchrone, notamment moteur, comprenant un stator et un rotor, le rotor étant un rotor tel qu'indiqué ci-dessus.

L'invention sera mieux comprise à la lecture de la description qui va suivre, faite uniquement à titre d'exemple et en se référant aux dessins annexés, sur lesquels :
- la figure 1 est une vue schématique en coupe axiale d'un moteur selon l'invention ;

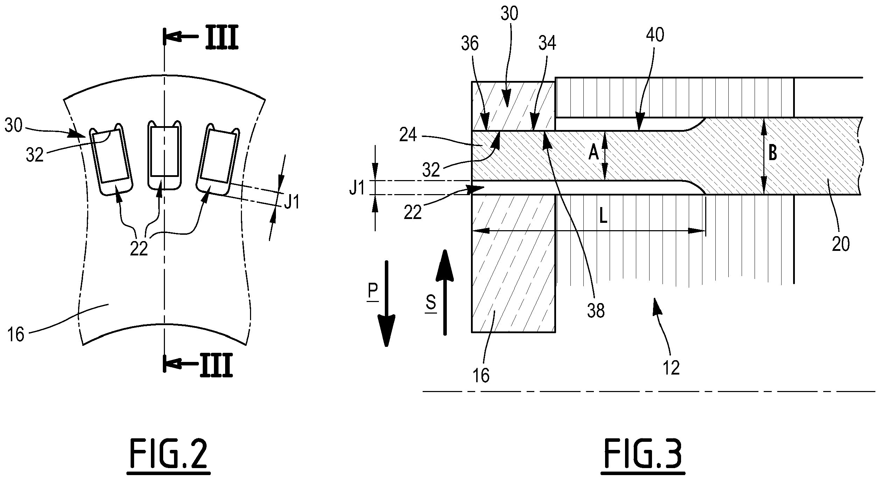

- la figure 2 est une vue axiale d'une partie du rotor du moteur de la figure 1 ;
- la figure 3 est une vue en coupe axiale de la partie du rotor montrée sur la figure 2, la coupe étant prise selon la ligne III - III de la figure 2 ;
- la figure 4 est un détail en vue axiale d'une variante du rotor montré sur les figures 1 à 3 lorsque celui-ci ne tourne pas ;
- la figure 5 est vue en coupe axiale de la partie du rotor montrée sur la figure 4, la coupe étant prise selon la ligne V - V de la figure 4 ; et
- les figures 6 et 7 sont des vues analogues à celles des figures 4 et 5 lorsque le rotor selon la variante est entraîné en rotation autour de son axe, la coupe de la figure 7 étant prise selon la ligne VII - VII de la figure 6.

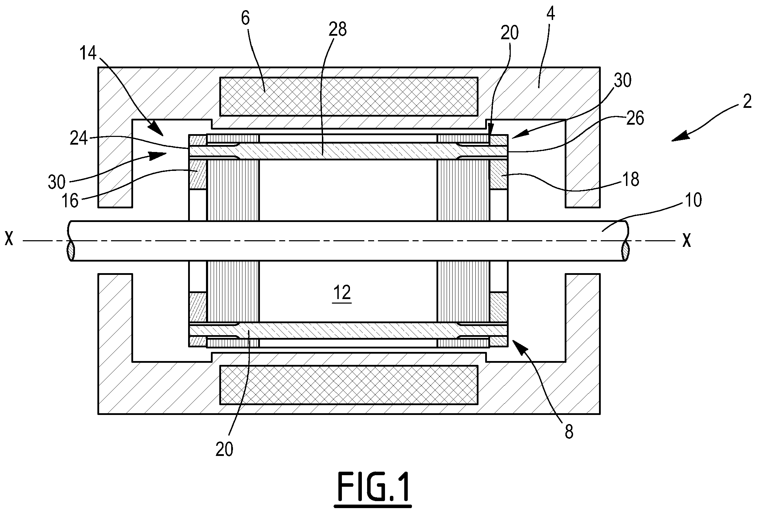

Sur la figure 1 est représenté un moteur selon l'invention, désigné par la référence générale 2.

Le moteur 2 comprend un boîtier 4, un stator 6 et un rotor 8.

Le moteur 2 est par exemple un moteur asynchrone.

Le moteur 2 est adapté pour fonctionner à des très hautes vitesses, par exemple allant de 3000 tours/minute à 30000 tours/minute et le rotor 8 est un rotor de masse importante, par exemple supérieure à 300 kg.

Le boîtier 4 et le stator 6 sont des éléments connus, et ils ne seront donc pas décrits plus en détail.

Le rotor 8 définit un axe de rotation X-X. Dans ce qui suit, les expressions « axialement », « radialement » et « circonférentiellement » seront utilisées par rapport à cet axe X-X.

Le rotor 8 comprend un arbre 10, une masse magnétique 12 et une cage de court-circuit 14.

La masse magnétique 12 est constituée d'un empilement de tôles rotoriques.

La cage de court-circuit 14 comprend une première couronne de court-circuit 16 électrique et mécanique, une deuxième couronne de court-circuit 18 électrique et mécanique ainsi qu'une pluralité de barres 20.

La première couronne de court-circuit 16 et la deuxième couronne de court-circuit 18 sont identiques et par la suite une seule de ces couronnes de court-circuit sera décrite.

La couronne de court-circuit 16, 18 est un disque circulaire disposé coaxialement à l'axe de rotation X-X. La première couronne de court-circuit 16 est disposée d'un côté axial de la masse magnétique 12 tandis que la deuxième couronne de court-circuit 18 est disposée de l'autre côté axial de la masse magnétique 12.

La couronne de court-circuit 16, 18 est fixée axialement par rapport à la masse magnétique 12 ou par rapport à l'axe 10. La couronne de court-circuit 16, 18 est par exemple frettée sur l'arbre 10 ou fixée à la masse magnétique 12. En variante, la couronne de court-circuit 16, 18 est fixée à toute autre pièce intermédiaire solidaire de l'arbre 10 ou de la masse magnétique 12.

La couronne de court-circuit 16, 18 est par exemple fabriquée en métal, de préférence fabriquée en cuivre. De préférence, la couronne de court-circuit 16, 18 est fabriquée d'un seul tenant, notamment d'une seule pièce.

Chaque couronne de court-circuit 16, 18 est munie d'une pluralité d'ouvertures axiales 22. Chaque ouverture axiale 22 est alignée radialement et circonférentiellement avec une barre 20.

Chaque barre 20 comporte une première partie d'extrémité 24, une deuxième partie d'extrémité 26 et une partie courante 28 s'étendant entre les parties d'extrémités 24, 26. Les barres 20 sont par exemple fabriquées en métal, tel que du cuivre. Les barres 20 sont disposées parallèlement à l'axe de rotation X-X.

En l'occurrence, la partie courante 28 a une section rectangulaire.

Chaque barre 20 est fabriquée d'un seul tenant, et notamment d'une seule pièce.

La première partie d'extrémité 24 est liée mécaniquement et électriquement à la première couronne de court-circuit 16 par un moyen de liaison 30. La seconde partie d'extrémité 26 est liée électriquement et mécaniquement à la seconde couronne de court-circuit 18 également par un moyen de liaison 30.

Selon l'invention, le moyen de liaison 30 est un moyen de liaison par complémentarité de formes retenant la partie d'extrémité 24, 26 par rapport à la couronne de court-circuit associée 16, 18 dans un sens de retenue S. Le sens de retenue S s'étend radialement par rapport à l'axe de rotation X-X. Dans le cas présent, le sens de retenue S correspond à un sens qui empêche la partie d'extrémité 24, 26 de se déplacer radialement vers l'extérieur.

Lorsque le rotor 8 ne tourne pas autour de son axe de rotation X-X, le moyen de liaison 30 précontraint la partie d'extrémité associée 24, 26 dans un sens de précontrainte P. Le sens de précontrainte P est le sens de déplacement de la partie d'extrémité associée 24, 26 de l'état non-précontraint vers l'état précontraint.

Le sens de précontrainte P a une composante radiale par rapport à l'axe de rotation X-X. Notamment, le sens de précontrainte P est dirigé radialement par rapport à l'axe de rotation X-X.

En l'occurrence, le sens de précontrainte P est opposé au sens de retenue S. En particulier, le moyen de liaison 30 précontraint la partie d'extrémité 24, 26 exclusivement dans un sens radial.

Dans le cas présent, le sens de retenue S est dirigé radialement vers l'extérieur. Il est donc un sens s'opposant à un déplacement radialement vers l'extérieur de la partie d'extrémité 24, 26 associée.

Le moyen de liaison 30 définit un jeu radial J1 entre la partie d'extrémité 24, 26 et la couronne de retenue 16, 18 associée dans un sens allant à l'encontre du sens de retenue S.

En l'occurrence, ce jeu radial J1 est défini par la différence entre la dimension radiale d de la partie d'extrémité 24, 26 et de la dimension radiale D de l'ouverture axiale 22. Ce jeu J1 permet notamment de dilater la couronne 16, 18 en la chauffant, de telle sorte que la couronne est enfilable sur les parties d'extrémité 24, 26 sans aucun contact entre la couronne et ces parties d'extrémités associées.

En l'occurrence, la partie d'extrémité 24, 26 a une section en forme de rectangle et les ouvertures axiales 22 ont une forme générale de rectangle. Les dimensions des parties d'extrémité 24, 26 et des ouvertures axiales 22 sont telles que la partie d'extrémité 24, 26 est axialement enfichable dans l'ouverture axiale 22 associée avec jeu.

En d'autres termes, à partir de la position précontrainte de la partie d'extrémité 24, 26 considérée, cette partie d'extrémité 24, 26 est déplaçable radialement vers l'intérieur en appliquant une force dirigée à l'encontre du sens de retenue S, c'est-à-dire radialement vers l'intérieur.

Chaque moyen de liaison 30 comprend une surface de retenue 32 de la couronne de court-circuit 16, 18 et une surface de retenue 34 de la partie d'extrémité 24, 26 associée, ces deux surfaces de retenue 32, 34 étant en contact avec précontrainte l'une de l'autre lorsque le rotor 8 ne tourne pas autour de son axe de rotation.

La précontrainte est ajustée par la flexion de la partie d'extrémité 24, 26 dans le sens de précontrainte P et par la forme de la partie d'extrémité 24, 26 en fonction du ratio de la hauteur radiale A de la partie d'extrémité 24, 26 considérée et de la hauteur radiale B de la partie courante 20 ainsi que par la longueur de flexion L. La longueur de flexion L est la longueur axiale de la portion d'extrémité 24, 26 considérée.

Chaque partie d'extrémité 24, 26 est libre de se déplacer axialement par rapport à la couronne de court-circuit 16, 18 associée. Il existe donc un degré de liberté axial de la partie d'extrémité 24, 26 par rapport à la couronne de court-circuit 16, 18 associée. L'invention permet donc à la barre 20 de se dilater axialement vis-à-vis de la couronne de court-circuit 16, 18 lorsque la barre 20 chauffe lors du fonctionnement. La barre 20 est libre de se dilater axialement puisque la liaison électrique entre la barre et la couronne n'est pas réalisée par soudage, ni brasage. Le rotor 8 ne comporte par ailleurs pas d'autres obstacles s'opposant à une dilatation axiale de la barre 20 par rapport aux couronnes de court-circuit 16, 18.

Le moyen de liaison 30 comprend également un méplat de contact 36 de la partie d'extrémité 24, 26, et une surface plane 38 associée à la couronne de court-circuit 16, 18 associée, le méplat de contact 36 s'appliquant sur la surface plane 38.

En l'occurrence, la surface de retenue 32 est formée par la surface plane 38 de la couronne de court circuit 16, 18 et la surface de retenue 34 de la partie d'extrémité est formée par le méplat de contact 36.

La masse magnétique 12 comporte pour chaque barre 20 un logement de barre 40. Le logement de barre 40 a une section transversale complémentaire de la partie courante 28 de la barre 20. Cette section transversale est donc rectangulaire.

Le rotor 8 est fabriqué avantageusement comme suit.

Tout d'abord, les barres 20 sont disposées autour de la masse magnétique 12 dans leur logement 40 respectif. Ensuite, la première couronne de court-circuit 16 est dilatée en la chauffant. A l'état chauffé, chaque ouverture axiale 22 se trouve entièrement en face de la première partie d'extrémité 24 associée de sorte à définir un jeu radial et circonférentiel entre chaque ouverture axiale 22 et la première partie d'extrémité 24 associée. A cet état, la première couronne de court-circuit 16 dilatée est enfilée sur les parties d'extrémité 24 associées, et ceci sans précontrainte radiale et de préférence sans contrainte circonférentielle. Ensuite, la première couronne de court-circuit 16 est rétrécie en la laissant refroidir. La précontrainte radiale de la partie d'extrémité 24 associée est créée lors du rétrécissement de la première couronne de court-circuit 16.

Ces étapes sont répétées pour la deuxième couronne de court-circuit 18 et les deuxièmes parties d'extrémité 26.

Le rotor 8 selon l'invention est donc particulièrement facile à fabriquer.

De plus, grâce à la précontrainte des parties d'extrémité 24, 26 par rapport aux couronnes de court circuit 16, 18, même lorsque le rotor 8 ne tourne pas, un bon contact électrique entre les éléments du rotor 8 est assuré.

Egalement, grâce au méplat 36 et à la surface de contact plane 38, la cage de court-circuit a une puissance élevée pour un volume donné. En particulier, la forme rectangulaire des barres 20 permet d'utiliser un méplat et d'obtenir une grande masse en cuivre dans le rotor pour un volume donné.

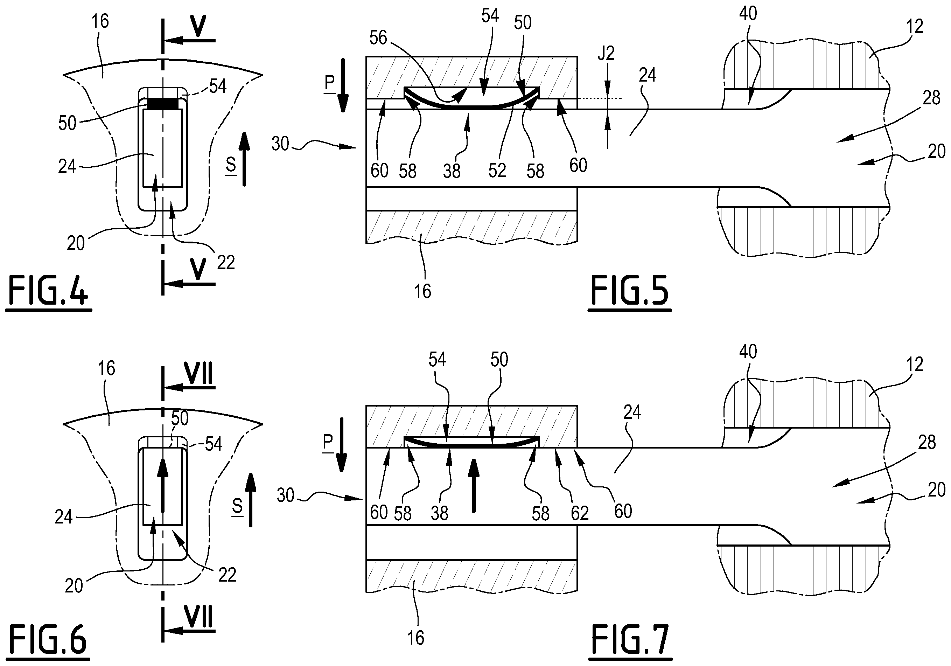

Sur les figures 4 à 7 est représenté un rotor selon une variante de l'invention.

Ce rotor 8 diffère de celui précédemment décrit uniquement par ce qui suit. Les éléments analogues portent les mêmes références.

Le moyen de liaison 30 comprend un organe de contact 50 interposé entre la couronne de court-circuit associée 16, 18 et la partie d'extrémité associée 24, 26. De plus, l'organe de contact 50 forme la surface plane 38 associée à la couronne de court-circuit 16, 18. En l'occurrence, l'organe de contact 50 est un ressort à lame 52 ou une lamelle flexible.

La couronne de court-circuit 16, 18 comprend un évidement 54 muni d'un fond 56 et de parois axiales 58. Le ressort à lame 52 est disposé, par exemple fixé, dans l'évidement 54. En l'occurrence, le ressort à lame 52 est disposé dans l'évidement 54 avec précontrainte en s'appliquant sur les parois axiales 58. A l'état non sollicité du ressort 52, celui-ci comporte une partie centrale qui s'étend en dehors de l'évidement 54 et qui forme la surface plane 38.

En variante, le ressort à lame 52 est collé dans l'évidement 54, ne nécessitant pas de précontrainte en l'absence des barres 20. Dans ce cas, en l'absence des barres 20, le ressort à lame 52 est hors contact des parois axiales 58.

Lorsque le rotor 8 n'est pas entraîné en rotation, la portion d'extrémité 24, 26 s'applique avec précontrainte contre le ressort 52, plus précisément contre la partie centrale du ressort à lame 52.

Dans cet état, la portion d'extrémité 24, 26 et la couronne de court-circuit 16, 18 associé forment un jeu J2 permettant un déplacement radialement vers l'extérieur de la portion d'extrémité 24, 26 à l'encontre de la force du ressort à lame 52, ce qui améliore le contact électrique entre la portion d'extrémité 24, 26 et le ressort à lame 52 lors d'une augmentation de la vitesse de rotation du rotor 8.

Le moyen de liaison 30 comprend également au moins une butée 60 adaptée pour limiter un déplacement de la partie d'extrémité 24, 26 dans le sens de retenue S sous la force centrifuge lorsque le rotor est entraîné en rotation, afin de limiter l'écrasement de l'organe de contact 50, et limiter la flexion et contrainte associée sous force centrifuge de la barre.

Cette butée 60 est formée par une surface de la couronne de court-circuit 16, 18, notamment plane, et dont la normale est dirigée radialement vers l'intérieur. En l'occurrence, la butée 60 est formée par une paroi 62 adjacente à la paroi 58 et s'étendant selon un plan parallèle à l'axe X-X.

Cette variante permet une définition avec précision de la force de précontrainte, en choisissant les paramètres des organes de contact 50. Egalement, le rotor 8 de cette variante pourrait être monté sans dilatation par chauffe de la couronne 16, 18, grâce aux jeux J1 et J2. Toutefois, un montage avec dilatation est plus facile.

Aussi, la cage de court circuit 14 de cette variante est facile à démonter à des fins d'entretien ou de réparation, grâce aux organes de contact 50.

L'invention peut être appliquée également à tout type de machine électrique, en particulier asynchrone, générateur ou moteur.

## Revendications

1. Rotor (8), du type s'étendant selon un axe de rotation (X-X), et comprenant :
- une cage de court-circuit (14) ayant au moins une barre (20) et au moins une première couronne de court-circuit (16) électrique et mécanique,
- la ou chaque barre ayant une première partie d'extrémité (24),
- la première partie d'extrémité (24) étant liée à la première couronne de court-circuit (16) mécaniquement et électriquement par un moyen de liaison (30),
- le ou chaque moyen de liaison (30) étant un moyen de liaison par complémentarité de formes retenant la partie d'extrémité (24, 26) par rapport à la couronne de court-circuit associée (16, 18) dans un sens de retenue (S) qui s'étend radialement par rapport à l'axe de rotation, dans lequel, lorsque le rotor ne tourne pas autour de son axe de rotation, le moyen de liaison (30) précontraint la partie d'extrémité (24, 26) dans un sens de précontrainte (P) ayant une composante radiale par rapport à l'axe de rotation, notamment qui est dirigé radialement par rapport à l'axe de rotation, en particulier dans lequel, le sens de précontrainte est opposé au sens de retenue, le sens de retenue étant un sens s'opposant à un déplacement radialement vers l'extérieur de la partie d'extrémité, **caractérisé en ce que** le ou chaque moyen de liaison définit un jeu radial (J1) entre la partie d'extrémité associée (24, 26) et la couronne de retenue associée (16, 18) dans un sens allant à l'encontre du sens de retenue.

2. Rotor selon la revendication 1, dans lequel la cage de court-circuit comporte une seconde couronne de court-circuit (18) électrique et mécanique, la ou chaque barre (20) ayant une seconde partie d'extrémité (26),
- la seconde partie d'extrémité (26) étant liée à la seconde couronne de court-circuit (18) mécaniquement et électriquement également par un moyen de liaison (30).

3. Rotor selon la revendications 1 ou 2, dans lequel le ou chaque moyen de liaison (30) comprend un méplat de contact (36) de la partie d'extrémité et une surface plane (38) associée à la couronne de court-circuit associée (16, 18), le méplat de contact s'appliquant sur la surface plane.

4. Rotor selon l'une quelconque des revendications 1 à 3, dans lequel le ou chaque moyen de liaison (30) comprend un organe de contact (50) interposé entre la couronne de court-circuit associée (16, 18) et la partie d'extrémité associée (24, 26), le cas échéant l'organe de contact (50) formant la surface plane (38).

5. Rotor selon la revendication 4, dans lequel l'organe de contact est un ressort à lame (52) ou une lamelle flexible.

6. Rotor selon la revendication 4 ou 5, dans lequel le ou chaque moyen de liaison (30) comprend une butée (60) adaptée pour limiter un déplacement de la partie d'extrémité (24, 26) dans le sens de retenue sous la force de centrifuge lors d'une rotation du rotor autour de son axe de rotation.

7. Rotor selon l'une des revendications 1 à 6, dans lequel le ou chaque moyen de liaison (30) comprend une surface de retenue (32) de la couronne de court-circuit (16, 18) et une surface de retenue (34) de la partie d'extrémité (24, 26) associée, ces deux surfaces étant en contact avec précontrainte l'une de l'autre lorsque le rotor ne tourne pas autour de son axe de rotation.

8. Procédé de fabrication d'un rotor selon la revendication 7, **caractérisé par** les étapes successives :
- dilater la couronne de court-circuit en la chauffant,
- enfiler la couronne de court-circuit dilatée sur la ou chaque partie d'extrémité associée à cette couronne de court-circuit,
- laisser rétrécir la couronne de court-circuit en la laissant refroidir,
- la précontrainte de la partie d'extrémité étant créée lors du rétrécissement de la couronne de court-circuit.

9. Machine électrique, en particulier machine asynchrone, notamment moteur, du type comprenant un stator (6) et un rotor (8), **caractérisé en ce que** le rotor est un rotor selon l'une quelconque des revendications 1 à 7.

## Patentansprüche

1. Rotor (8) der Bauart, die sich entlang einer Drehachse (X-X) erstreckt, und aufweisend:
- einen Kurzschlusskäfig (14) mit wenigstens einem Stab (20) und wenigstens einem ersten elektrischen und mechanischen Kurzschlussring (16),
- wobei der oder jeder Stab einen ersten Endabschnitt (24) aufweist,
- wobei der erste Endabschnitt (24) mit dem ersten Kurzschlussring (16) über ein Verbindungsmittel (30) mechanisch und elektrisch verbunden ist,
- wobei das oder jedes Verbindungsmittel (30) ein Formschlussverbindungsmittel ist, das den Endabschnitt (24, 26) in Bezug auf den zugehörigen Kurzschlussring (16, 18) in einer Rückhalterichtung (S) hält, die sich radial in Bezug auf die Drehachse erstreckt, wobei, wenn sich der Rotor nicht um seine Drehachse dreht, das Verbindungsmittel (30) den Endabschnitt (24, 26) in eine Vorspannrichtung (P) vorspannt, die eine radiale Komponente in Bezug auf die Drehachse aufweist, insbesondere radial in Bezug auf die Drehachse ausgerichtet ist, wobei insbesondere die Vorspannrichtung zu der Rückhalterichtung entgegengesetzt ist, wobei die Rückhalterichtung eine Richtung ist, die einer Verlagerung des Endabschnitts radial nach außen entgegenwirkt, **dadurch gekennzeichnet, dass** das oder jedes Verbindungsmittel ein Radialspiel (J1) zwischen dem zugehörigen Endabschnitt (24, 26) und dem zugehörigen Rückhaltering (16, 18) in einer Richtung entgegen der Rückhalterichtung definiert.

2. Rotor nach Anspruch 1, wobei der Kurzschlusskäfig einen zweiten elektrischen und mechanischen Kurzschlussring (18) aufweist, wobei der oder jeder Stab (20) einen zweiten Endabschnitt (26) aufweist,
- wobei der zweite Endabschnitt (26) mit dem zweiten Kurzschlussring (18) ebenfalls über ein Verbindungsmittel (30) mechanisch und elektrisch verbunden ist.

3. Rotor nach Anspruch 1 oder 2, wobei das oder jedes Verbindungsmittel (30) eine ebene Kontaktfläche (36) des Endabschnitts und eine ebene Fläche (38) aufweist, die dem zugehörigen Kurzschlussring (16, 18) zugeordnet ist, wobei die ebene Kontaktfläche an der ebenen Fläche anliegt.

4. Rotor nach einem beliebigen der Ansprüche 1 bis 3, wobei das oder jedes Verbindungsmittel (30) ein Kontaktelement (50) aufweist, das zwischen dem zugehörigen Kurzschlussring (16, 18) und dem zugehörigen Endabschnitt (24, 26) eingefügt ist, wobei das Kontaktelement (50) gegebenenfalls die ebene Fläche (38) bildet.

5. Rotor nach Anspruch 4, wobei das Kontaktelement eine Blattfeder (52) oder eine flexible Lamelle ist.

6. Rotor nach Anspruch 4 oder 5, wobei das oder jedes Verbindungsmittel (30) einen Anschlag (60) aufweist, der eingerichtet ist, um bei einer Rotation des Rotors um seine Drehachse eine Verlagerung des Endabschnitts (24, 26) in der Rückhalterichtung unter der Zentrifugalkraft zu begrenzen.

7. Rotor nach einem der Ansprüche 1 bis 6, wobei das oder jedes Verbindungsmittel (30) eine Rückhaltefläche (32) des Kurzschlussringes (16, 18) und eine Rückhaltefläche (34) des zugehörigen Endabschnitts (24, 26) aufweist, wobei diese beiden Flächen unter Vorspannung in Kontakt miteinander stehen, wenn sich der Rotor nicht um seine Drehachse dreht.

8. Verfahren zur Herstellung eines Rotors nach Anspruch 7, **gekennzeichnet durch** die aufeinanderfolgenden Schritte:
- Dehnen des Kurzschlussringes, indem dieser erwärmt wird,
- Aufschieben des gedehnten Kurzschlussringes auf den oder jeden Endabschnitt, der diesem Kurzschlussring zugeordnet ist,
- Schrumpfenlassen des Kurzschlussringes, indem dieser abkühlen gelassen wird,
- wobei während des Schrumpfens des Kurzschlussringes die Vorspannung des Endabschnitts erzeugt wird.

9. Elektrische Maschine, insbesondere Asynchronmaschine, insbesondere ein Motor der Bauart, die einen Stator (6) und einen Rotor (8) aufweist, **dadurch gekennzeichnet, dass** der Rotor ein Rotor nach einem beliebigen der Ansprüche 1 bis 7 ist.

## Claims

1. Rotor (8) of the type extending in a rotation axis (X-X) and comprising:
- a short-circuit cage (14) having at least one bar (20) and at least one first electrical and mechanical short-circuit crown (16),
- the or each bar having a first end part (24),
- the first end part (24) being connected mechanically and electrically to the first short-circuit crown (16) by a connection means (30),
- the or each connecting means (30) being a means of complementary form connection, which retains the end part (24, 26) relative to the associated short-circuit crown (16, 18) in a retaining direction (S) extending radially relative to a rotation axis, wherein when the rotor is not rotating about its rotation axis, the connecting means (30) preloads the end part (24, 26) in a preload direction (P) with a radial component relative to the rotation axis, in particular directed radially relative to the rotation axis, in particular wherein the preload direction is opposite the retaining direction, the retaining direction being a direction opposing a radial displacement of the end parts towards the outside,
**characterised in that** the or each connecting means defines a radial play (J1) between the associated end part (24, 26) and the associated retaining crown (16, 18) in a direction contrary to the retaining direction.

2. Rotor according to claim 1, wherein the short-circuit cage comprises a second electrical and mechanical short-circuit crown (18), the or each bar (20) having a second end part (26), wherein the second end part (26) is connected mechanically and electrically to the second short-circuit crown (18) also by a connecting means (30).

3. Rotor according to claim 1 or 2, wherein the or each connecting means (30) comprises a contact flat (36) on the end part and a flat surface (38) associated with the respective short-circuit crown (16, 18), wherein the contact flat rests on the flat surface.

4. Rotor according to any of claims 1 to 3, wherein the or each connecting means (30) comprises a contact member (50) interposed between the associated short-circuit crown (16, 18) and the associated end part (24, 26), and where applicable the contact member (50) forms the flat surface (38).

5. Rotor according to claim 4, wherein the contact member is a leaf spring (52) or a flexible strip.

6. Rotor according to claim 4 or 5, wherein the or each connecting means (30) comprises a stop (60) adapted to limit a movement of the end part (24, 26) in the retaining direction under centrifugal force during rotation of the rotor about its rotation axis.

7. Rotor according to any of claims 1 to 6, wherein the or each connecting means (30) comprises a retaining surface (32) for the short-circuit crown (16, 18) and a retaining surface (34) for the associated end part (24, 26), the two surfaces being in preloaded contact with each other when the rotor is not rotating about its rotation axis.

8. Method for producing a rotor according to claim 7, **characterised by** the successive steps:
- expanding the short-circuit crown by heating,
- threading the expanded short-circuit crown over the or each end part associated with this short-circuit crown,
- allowing the short-circuit crown to shrink by leaving it to cool,
- the preload of the end part being created during the shrinkage of the short-circuit crown.

9. Electrical machine, in particular an asynchronous machine, in particular a motor, of the type comprising a stator (6) and a rotor (8), **characterised in that** the rotor is a rotor according to any of claims 1 to 7.
